# EUROPEAN PATENT APPLICATION

(11) **EP 4 755 698 A1**
(43) Date of publication of application: **10.06.2026**
(21) Application number: 25218883.4
(22) Date of filing: 26.11.2025
(51) Int. Cl.: B60L 53/00, B60L 53/12, B60L 53/39, B60L 53/37

(54) **WIRELESS CHARGING SYSTEM FOR ELECTRIC VEHICLE**

(30) Priority: 03.12.2024 KR 20240177751
(71) Applicant: Green Power Co., Ltd., Hwaseong-si, Gyeonggi-do 18469 (KR)
(72) Inventor: CHO, Jung Goo, 16517 Gyeonggi-do (KR)
(74) Representative: Sander, Rolf

(57) **Abstract**

Disclosed is a wireless charging system for an electric vehicle. A transmitter pad and an inverter are installed in a parking lot having a parking line indicated therein. The inverter previously memorizes a relative location of the transmitter pad to the parking line. An electric vehicle memorizes the location of a receiver pad at the bottom thereof. When entering a parking area, the electric vehicle recognizes a parking line through a camera, and performs parking so that the transmitter pad and the receiver pad are horizontally aligned by calculating a relative location of the transmitter pad to the receiver pad in real time through communication with the inverter. After the parking, charging is started after vertical alignment with the receiver pad by adjusting the height of the transmitter pad through a transmitter coil on the transmitter pad.

## Description

### CROSS-REFERENCE TO RELATED APPLCIATION

This application claims priority to Korean Patent Applicatoin No. 10-2024-0177751 filed on December 3, 2024, the entire contents of which are herein incorporated by reference.

### BACKGROUND

### 1. Technical Field

The present disclosure relates to a wireless charging system for an electric vehicle, which implements a low cost and high efficiency by accurately aligning a receiver coil and a transmitter coil horizontally and vertically before the start of charging in a way to induce the parking of an electric vehicle so that a transmitter pad and a receiver pad are horizontally aligned through communication with an inverter and the recognition of a parking line by calculating a relative location of the transmitter pad to the receiver pad in real time when the electric vehicle enters a parking area for charging and adjusting the height of the transmitter coil by using height adjustment means provided on the transmitter pad after parking.

### 2. Related Art

Contents described in this part merely provide background information of the present embodiment and do not constitute a conventional technology.

A charging method of an electric vehicle charger is divided into a wired charging method of performing charging by directly connecting a plug to a vehicle and a wireless charging method of performing charging in a contactless manner by using a self-induced method without a plug.

A common wireless charging system for an electric vehicle has a structure in which a battery is charged by transmitting power between a transmitter pad installed at the floor of a parking lot and a receiver pad mounted at the bottom of an electric vehicle through self-induction, and may include an inverter that inputs a high-frequency current to the transmitter pad and a rectifier circuit that inputs a charging current to the battery by rectifying the output of the receiver pad.

A wired charger has good charging efficiency, but has inconvenience in that a heavy and complicated plug needs to be put in and pulled out from a vehicle whenever charging is performed. In contrast, a wireless charger has an advantage in that charging is very convenient because a vehicle is automatically charging as long as the vehicle is parked. However, the wireless charger has problems in that it is difficult to accurately horizontally align a transmitter pad and a receiver pad depending on a parking location of a driver and vertical alignment is not easy because the ground height (i.e., the height of a bottom surface) of a vehicle is different depending on the type of vehicle. A current wireless charging technology needs to permit a predetermined range of a horizontal alignment error and needs to be designed to have a wide air gap range due to such problems. Current international standards require an error tolerance of ±7.5 cm in forward and backward directions of a vehicle and ±10 cm in the horizontal direction of the vehicle. There is a problem in that an air gap change of the lowest ground height, that is, about 12 cm, to 30 cm in the vertical direction needs to be accommodated. In this case, there are disadvantages in that the size of the transmitter pad is much greater than the size of the receiver pad charger efficiency is very low.

Furthermore, from the nature of the charging of a self-induced method, a metal foreign object detection (FOD) function is required because there is a danger of fire when a metallic object is present between the transmitter pad and the receiver pad. A live object detection (LOD) function is essentially required because if a creature, such as a dog or a cat, approaches the transmitter pad during charging, such an approach may affect the human body. Moreover, a position detection (PD) function for determining whether the receiver pad of an electric vehicle has been aligned with the transmitter pad is also required.

However, the current FOD, LOD, and PD techniques have disadvantages in that a cost is high and lots of errors occur because a complex hardware construction and a software algorithm are required.

In addition to such high cost and low efficiency (about a difference of 5% compared to wired charging) problems, there is a problem in that the capacity of a charger cannot be much increased due to a problem with a rise in costs. Today, only a slow charger of about 11 kW has been developed, and has not yet been commercialized due to high costs. An 11-kW wireless charger will be suitable for overnight charging for home use, but has a problem in that the 11 kW wireless charger is not sufficient in the field in which charging is frequently performed and a case in which a person has to get back to work quickly after charging, like a robot taxi.

A robot taxi requires quick charging of at least 50 kW or more, and has a problem in that it is not easy to overcome a high cost price and a low efficiency problem.

Recently, in order to maximize efficiency of power transmission between the transmitter pad and the receiver pad, there is suggested a method of horizontally aligning the transmitter pad and the receiver pad by using an automatic parking function for an electric vehicle and constantly maintaining an air gap with respect to the receiver pad regardless of the ground height of the electric vehicle by adjusting the height of a transmitter coil through a height adjustment device added within the transmitter pad. This method has advantages in that the size of the transmitter pad can be significantly reduced and efficiency can be maximized when horizontal alignment and vertical alignment are well performed. However, a current automatic parking technology has difficulty in implementing accurate horizontal alignment between the transmitter pad and the receiver pad because the current automatic parking technology is merely at the level at which a vehicle is simply aligned at the center of a parking area. The reason for this is that the size of an electric vehicle is different depending on the type of electric vehicle, a location at which the receiver pad is installed is different, and the size of a parking area or a location at which the transmitter pad is installed has not been standardized.

Accordingly, in order to properly commercialize a wireless charger, there is a need to develop a new wireless charging technology capable of securing both economics and high efficiency while supporting the conventional functions without any change.

### SUMMARY

various embodiments are directed to improving the accuracy of horizontal alignment compared to a conventional technology by calculating a relative location of a transmitter pad to a receiver pad in real time through a parking line recognition function and communication with an inverter and using the relative location in the horizontal alignment when an electric vehicle enters a parking area for charging.

Furthermore, various embodiments are directed to reducing the size of the transmitter pad and maximizing power transmission efficiency by improving the structure of alignment means for vertical alignment and also minimizing a cost price for the entire system by separately implementing the FOD, LOD, and PD functions.

In an embodiment, a wireless charging system for an electric vehicle includes a parking area in which a parking line is indicated, a transmitter pad installed in the parking area, an inverter configured to supply AC power to the transmitter pad and having a communication function, an electric vehicle having a parking line recognition function and a communication function using a camera, a receiver pad attached to a bottom surface of the electric vehicle, and a wireless charging platform.

The electric vehicle memorizes a location at which the receiver pad is attached within the electric vehicle. The inverter memorizes the location of the transmitter pad on the basis of the parking line in the parking area.

When the electric vehicle enters the parking area for charging, the electric vehicle recognizes a horizontal alignment state between the receiver pad and the transmitter pad by calculating a relative location of the transmitter pad to the receiver pad in real time by recognizing the parking line using the camera while communicating with the inverter. In this case, communication pairing between the electric vehicle that enters the parking area and the inverter may be performed as the inverter recognizes the number of the electric vehicle through a camera included therein and selects a communication ID connected to the number of the electric vehicle.

Furthermore, in an embodiment of the present disclosure, the electric vehicle includes a monitor, displays the fixed location of the receiver pad on the monitor upon parking, calculates the relative location of the transmitter pad to the receiver pad, and displays results of the calculation on the monitor so that a driver is induced to park the electric vehicle so that the transmitter pad and the receiver pad are horizontally aligned while viewing the monitor.

Furthermore, the electric vehicle includes an automatic parking function, performs automatic parking by recognizing a location of the parking line upon parking, and performs the automatic parking so that the transmitter pad and the receiver pad are horizontally aligned by calculating the relative location of the transmitter pad to the receiver pad attached to the electric vehicle.

Furthermore, in an embodiment of the present disclosure, the transmitter pad includes a transmitter coil capable of a vertical movement thereon. Vertical alignment with the receiver pad is performed by adjusting the height of the transmitter coil.

Furthermore, the inverter includes a camera and a lighting device or a thermal imaging camera that are disposed outside the parking area and are directed toward the transmitter pad, and inspects whether a metallic foreign substance is present on the transmitter pad when an electric vehicle is not present in the parking area or while an electric vehicle is charged.

Furthermore, the transmitter pad includes one or more second thermal imaging cameras or second cameras and second lighting devices that protrude from a surface of the transmitter coil within a predetermined distance or less outside the transmitter coil, and inspects whether a heating point attributable to a metallic foreign substance or an external creature is present between the transmitter pad and the receiver pad in real time while the electric vehicle is charged.

The wireless charging system for an electric vehicle according to an embodiment of the present disclosure is constructed to enable an electric vehicle to be parked so that the transmitter pad and the receiver pad are horizontally aligned by calculating a relative location of the transmitter pad to the receiver pad in real time through communication the inverter and the recognition of a parking line when the electric vehicle enters a parking area for charging, and to start charging after vertical alignment with the receiver pad is achieved by adjusting the height of the transmitter coil through the transmitter pad including the transmitter coil capable of being vertically moved on the transmitter pad after the parking is completed. By such a construction, the structure of the transmitter pad can be simplified, and the size of the transmitter pad can be minimized, and power transmission efficiency can be maximized. Furthermore, there is an advantage in that a cost price for a wireless charger can be efficiently reduced because functions, such as the FOD, LOD, and PD functions, are separated from the inside of the transmitter pad and placed outside. Accordingly, the wireless charging system according to an embodiment of the present disclosure can extend a wireless charging capacity that is conventionally merely at a 1 kW level up to a 50 to 300 kW and can achieve high power transmission efficiency of about 93 to 95% which is close to power transmission efficiency of a wired charger.

### BRIEF DESCRIPTION OF THE DRAWINGS

FIG. 1 is a diagram for describing a conventional wireless charging system for an electric vehicle.
FIG. 2 is a diagram for describing a wireless charging system for an electric vehicle according to another conventional embodiment.
FIG. 3 is a diagram illustrating an alignment condition for a transmitter pad and a receiver pad in a wireless charging system for an electric vehicle.
FIG. 4 is a diagram for describing a horizontal alignment method for a transmitter pad and a receiver pad in a wireless charging system for an electric vehicle according to an embodiment of the present disclosure.
FIG. 5 is a diagram illustrating a process of aligning a transmitter pad and a receiver pad which are displayed on a monitor in an electric vehicle upon parking in the wireless charging system for an electric vehicle according to an embodiment of the present disclosure.
FIG. 6 is a diagram illustrating an overall process in which the transmitter pad and the receiver pad installed in a head-on parking-dedicated parking area are horizontally aligned in the wireless charging system for an electric vehicle according to an embodiment of the present disclosure.
FIG. 7 is a diagram illustrating an overall process in which the transmitter pad and the receiver pad installed in a rear parking-dedicated parking area are horizontally aligned in the wireless charging system for an electric vehicle according to an embodiment of the present disclosure.
FIG. 8 is a diagram for describing a construction and an operation method for horizontal alignment at a home parking lot in a wireless charging system for an electric vehicle according to another embodiment of the present disclosure.
FIG. 9 is a diagram for describing a method of vertically aligning a transmitter coil in the wireless charging system for an electric vehicle according to an embodiment of the present disclosure.
FIG. 10 is a diagram that exemplifies a vertical driving unit structure of the transmitter pad for vertical alignment in FIG. 9.
FIG. 11 is a diagram for describing a method of vertically aligning the transmitter coil using a pad aligner according to another embodiment of the present disclosure.
FIGS. 12 and 13 are diagrams for describing a metal foreign object detection (FOD) method according to an embodiment of the present disclosure.
FIG. 14 is a diagram for describing the entire structure and charging process of the wireless charging system for an electric vehicle according to an embodiment of the present disclosure.

### DETAILED DESCRIPTION

Embodiments of the present disclosure will be described in detail as follows with reference to the accompanying drawings. The following detailed description is merely exemplary and merely illustrates some embodiments of the present disclosure.

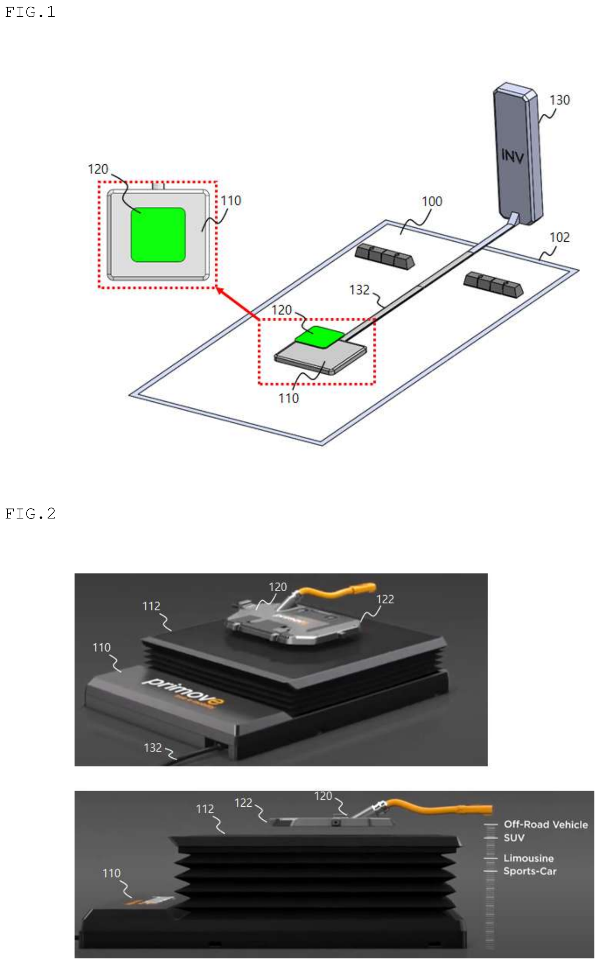

FIG. 1 is a configuration diagram of a conventional wireless charging system for an electric vehicle. FIG. 1 illustrates the structure of a wireless charging system for an electric vehicle when a transmitter pad is implemented in a form in which the transmitter pad is fixed to the floor of a parking area. Hereinafter, during the course of describing the wireless charging system for an electric vehicle, for clear distinction, in some drawings, the main body of the electric vehicle is omitted, and only a receiver pad is illustrated and described. Furthermore, in the case of the transmitter pad and the receiver pad, a transmitter coil and a receiver coil included in the transmitter pad and the receiver pad, respectively, are omitted, and only appearances of the transmitter pad and the receiver pad are illustrated and described.

Referring to FIG. 1, the wireless charging system for an electric vehicle may basically include at least one electric vehicle wireless charger, including a parking area 100 that is install within a parking space and in which a parking line 102 is indicated, a transmitter pad 110 that is installed at the floor of the parking area 100 and that includes a transmitter coil 112 on the transmitter pad, a receiver pad 120 that is installed under an electric vehicle and that includes a receiver coil 122 that collects power through magnetic coupling with the transmitter coil, an inverter 130 that is connected to the transmitter pad 110 and that provides charging power, and a charging cable 132 that electrically connects the inverter 130 and the transmitter pad 110.

In this case, the transmitter pad 110 may be installed on the parking area or a part of or the entire transmitter pad may be buried and fixed to the parking area. The inverter 130 is disposed by being isolated from the transmitter pad 110. The charging cable 132 electrically connects the inverter 130 and the transmitter pad 110. The charging cable 132 may be buried in the ground or may be disposed on the ground through a cable duct, and may transmit charging power supplied from the inverter 130 to the electric vehicle through the transmitter pad 110.

In the wireless charging of the electric vehicle, a method of disposing the electric vehicle on which the receiver pad 120 is mounted on the transmitter pad 110 installed on the ground, inducing power into the receiver pad 120 of the electric vehicle by using magnetic induction power that is generated by applying a current to the transmitter pad 110 so that a battery included in the electric vehicle is charged is used. In general, power transmission efficiency of such a wireless charging system is determined by the alignment degree of the transmitter pad 110 and the receiver pad 120 and a distance between the transmitter pad 110 and the receiver pad 120, that is, an air gap.

However, a fixed type transmitter pad method has limitations in that it is difficult to accurately align the transmitter pad and the receiver pad depending on a parking method of an electric vehicle. A driver may attempt to align the transmitter pad and the receiver pad with reference to parking area information displayed on a monitor in an electric vehicle, but practically has difficulty in precisely aligning the transmitter pad and the receiver pad. Accordingly, in the international standards, a horizontal alignment tolerance is regulated as ±7.5 cm in forward and backward directions and ±10 cm in the horizontal direction. Furthermore, the air gap between the transmitter coil and the receiver coil is variously changed from about 12 cm to 35 cm depending on the ground height of an electric vehicle. In order to compensate for such an alignment tolerance, in general, the size of the transmitter pad needs to be designed about two times or more that is greater than the size of the receiver pad. Even though, the reality is that wireless charger efficiency is maximized of about 90%, which is about 5% lower than charger efficiency of a wired charger.

Furthermore, a foreign object detection (FOD) function for detecting a metallic foreign substance is essentially required because induction heating may occur and result in a fire due to a metallic foreign substance when the metallic foreign substance is present between the transmitter pad and the receiver pad. Furthermore, a live object detection (LOD) function is also required because an animal, such as a dog or a cat, may be hazardous if the animal is present on or around the transmitter pad. Furthermore, there is a need for a position detection (PD) function for recognizing an alignment state between the transmitter pad and the receiver pad. In order to implement these functions, separate auxiliary coils and complex sensing circuits are necessary for the transmitter pad and the receiver pad. For these reasons, the existing wireless charging system has an obstacle to commercialization because the existing wireless charging system has disadvantages, such as a high cost price, low efficiency, and a large pad size, and experiences the frequent occurrence of a charging obstacle problem attributable to erroneous detection because the level of completion of the FOD and LOD technologies is low.

FIG. 2 is a diagram for describing a wireless charging system for an electric vehicle according to another conventional embodiment. FIG. 2 exemplifies a wireless charging structure for an electric vehicle, which has been implemented to constantly maintain an air gap between the transmitter coil 112 and the receiver coil 122 by adjusting the height of the transmitter coil 112 within the transmitter pad 110. Such a method is a method of constantly maintaining the air gap between the transmitter pad 110 and the receiver pad 120 by horizontally the transmitter pad 110 and the receiver pad 120 by using the automatic parking function of an electric vehicle and adjusting the height of the transmitter coil 112 regardless of the ground height of the electric vehicle through a height adjustment device added within the transmitter pad 110. The method has advantages in that both horizontal alignment and vertical alignment can be accurately performed, the size of the transmitter pad 110 can be significantly reduced, and power transmission efficiency can be maximized. However, a current automatic parking technology has limitations in that it is difficult to implement precise horizontal alignment between the transmitter pad 110 and the receiver pad 120 because the current automatic parking technology is merely at the level at which an electric vehicle is simply aligned at the center of a parking area. The reason for this is that the size of an electric vehicle and the location at which the receiver pad 120 is attached within an electric vehicle are different for each electric vehicle and the size of a parking area or the location at which the transmitter pad 110 is installed within the parking area also has not been standardized. Accordingly, in order to realize accurate horizontal alignment, it is necessary to standardize the location at which the receiver pad 120 is attached within an electric vehicle and the location at which the transmitter pad is installed for each electric vehicle manufacturer, but this is practically difficult because interests between the manufacturers are different. As a result, if only vertical alignment is performed in the state in which horizontal alignment has not been properly performed. It is difficult to obtain high efficiency. Furthermore, there is still a cost price rise problem because the FOD and LOD functions are required within the transmitter pad 110 as in the existing technology.

Accordingly, embodiments of the present disclosure propose a wireless charging system for an electric vehicle using a new alignment method, which has both economics and high efficiency by improving the problems of the conventional wireless charging system for an electric vehicle.

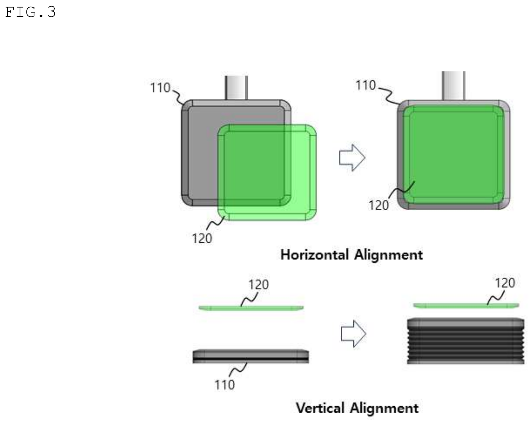

FIG. 3 illustrates a preferred alignment state between the transmitter pad and the receiver pad in a wireless charging system for an electric vehicle. As illustrated in FIG. 3, if both horizontal alignment and vertical alignment between the transmitter pad 110 and the receiver pad 120 are accurately performed, the sizes of the transmitter pad and the receiver pad can be minimized and high efficiency can be obtained at a low cost price because the air gap can be minimized. However, the transmitter pad 110 has to be moved or the receiver pad 120 has to be moved for horizontal alignment because the transmitter pad 110 is installed in a parking area and the receiver pad 120 is attached to the bottom of an electric vehicle. An embodiment of the present disclosure proposes the latter method, that is, a method of moving the receiver pad, that is, a method of performing horizontal alignment by moving the electric vehicle.

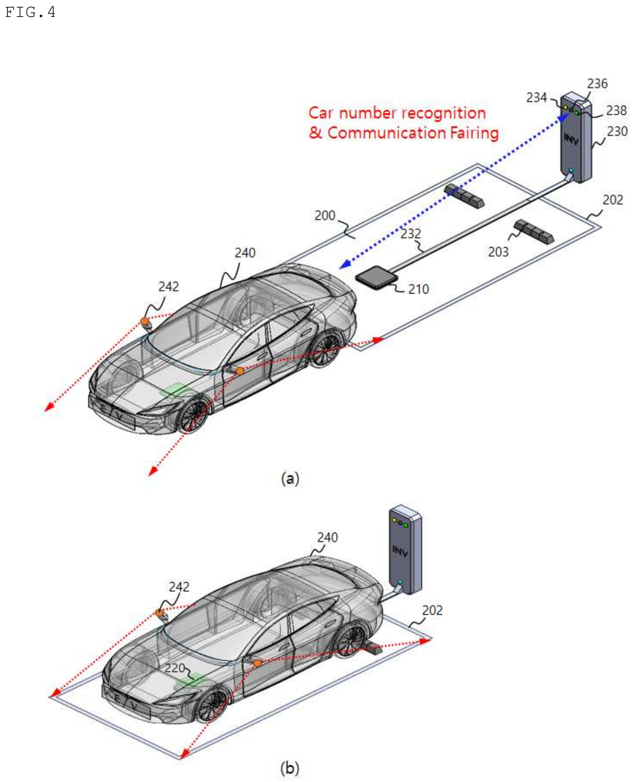

FIG. 4 is a diagram for describing a construction and operation of a wireless charging system for an electric vehicle according to an embodiment of the present disclosure.

The wireless charging system for an electric vehicle according to an embodiment of the present disclosure may basically include at least one electric vehicle wireless charger, including a parking area 200 in which a parking line 202 is indicated, a transmitter pad 210 that is installed in the parking area 200 and that includes a transmitter coil 212 on the transmitter pad, a receiver pad 220 that is installed at the bottom of an electric vehicle 240 and that includes a receiver coil 222 that receives power through magnetic coupling with the transmitter coil 212, an inverter 230 that is connected to the transmitter pad 210 and that provides charging power, and a charging cable 232 that electrically connects the inverter 230 and the transmitter pad 210, as in a conventional wireless charging system for an electric vehicle. Hereinafter, for convenience' sake, one electric vehicle wireless charger is described as an example, but one or more electric vehicle wireless chargers may be included in an actual wireless charging system for an electric vehicle.

Furthermore, the wireless charging system for an electric vehicle according to an embodiment of the present disclosure may further include a wireless charging platform (not illustrated) that is responsible for control of the entire charging system, if necessary.

The wireless charging system for an electric vehicle according to an embodiment of the present disclosure has improved a structure for vertical alignment while increasing the accuracy of horizontal alignment compared to a conventional system in a method of aligning the transmitter coil and the receiver coil. Furthermore, the wireless charging system has advantages in that the size of the transmitter pad 210 can be minimized, a structure can be simplified, and power transmission efficiency can be maximized because some functions, such as the FOD and LOD functions, are separately implemented outside the transmitter pad 210.

An alignment method for electric vehicle wireless charging according to an embodiment of the present disclosure includes calculating a relative location of the transmitter pad 210 to the receiver pad 220 in real time through the recognition of the parking line 202 and communication with the inverter 230 when the electric vehicle 240 enters the parking area 200 for charging. Accordingly, the electric vehicle can be parked so that the transmitter pad and the receiver pad are horizontally aligned based on the recognized horizontal alignment state between the receiver pad 220 and the transmitter pad 210. After the horizontal alignment is completed, vertical alignment that constantly maintains the air gap between the transmitter coil 212 and the receiver coil 222 by adjusting the height of the transmitter coil by using height adjustment means included in the transmitter pad 210 may be performed.

Hereinafter, horizontal alignment and vertical alignment methods according to an embodiment of the present disclosure are described more specifically.

First, the horizontal alignment method is described. In an embodiment of the present disclosure, the electric vehicle 240 may memorize the location of the receiver pad 220 attached within the electric vehicle, and may calculate the relative location of the receiver pad 220 on the basis of a reference object that is present at a predetermined location on the parking area recognized by a camera 242 installed in the electric vehicle. The reference object may be the parking line 202 that partitions the parking area. Hereinafter, the parking line is described as an example of the reference object, but the present disclosure is not limited thereto.

Furthermore, the inverter 230 disposed outside the parking line 202 includes a camera and a communication function, and memorizes the relative location of the transmitter pad 210 installed in the parking area 200 to the parking line 202.

Accordingly, as illustrated in FIG. 4(A), when the electric vehicle 240 enters the parking area 200 for charging, the electric vehicle 240 recognizes front and side parking lines through a parking line recognition function, and also collects information on the relative location of the transmitter pad 210 to the front and side parking lines through communication with the inverter 230.

The inverter 230 recognizes the number of the electric vehicle that is entering the parking area 200 by using the camera of the inverter during a process of communicating with the electric vehicle, searches for a communication ID that is connected to the number of the electric vehicle, and performs pairing between the inverter and the electric vehicle. Accordingly, the inverter 230 and the electric vehicle 240 can communicate with each other in real time, and a Wi-Fi method may be used for the communication.

Furthermore, the wireless charging platform may collect and share basic information related to charging by performing communication between the electric vehicle 240 and a smartphone of a user or the inverter 230 before the start of the charging. In this case, the basic information related to charging may include the type of electric vehicle, the number of the electric vehicle, electric vehicle information, such as pairing information for a communication connection with the electric vehicle, charging information, such as the amount of charging, a charging fee, a charging time, and a charging voltage, and user information, such as a user name, payment means, and user input information. The inverter 230 identifies charging intention through communication with the electric vehicle, and starts a charging processor when the charging intention is identified.

In another embodiment, the wireless charging platform may memorize the relative location of the transmitter pad to the parking line instead of the inverter 230. In this case, the electric vehicle 240 may collect relative location information on the transmitter pad 210 through communication with the wireless charging platform.

The electric vehicle 240 memorizes the location at which the receiver pad is attached within the electric vehicle, and recognizes the horizontal alignment state between the transmitter pad and the receiver pad by calculating the relative location of the transmitter pad 210 to the receiver pad 220 in real time based on parking line recognition information and location information of the transmitter pad 210 that is collected from the inverter 230. The electric vehicle 240 according to an embodiment of the present disclosure may display the recognized horizontal alignment state on a monitor 300 within the electric vehicle, and may perform parking so that the transmitter pad 210 and the receiver pad 220 are horizontally aligned by using the recognized horizontal alignment state.

However, the parking line recognition function of the electric vehicle 240 may not be precise. In order to supplement such a problem, the camera 234 of the inverter 230 may sense the left and right alignment state of the electric vehicle 240 that enters the parking area, and may support that the electric vehicle can be aligned more accurately through communication. The camera is disposed at an upper part of the inverter 230, and may determine the left and right alignment state of the entire electric vehicle. In another embodiment, the camera may be disposed at a lower part of the inverter 230, and may directly determine the left and right alignment state between the transmitter pad 210 and the receiver pad 220.

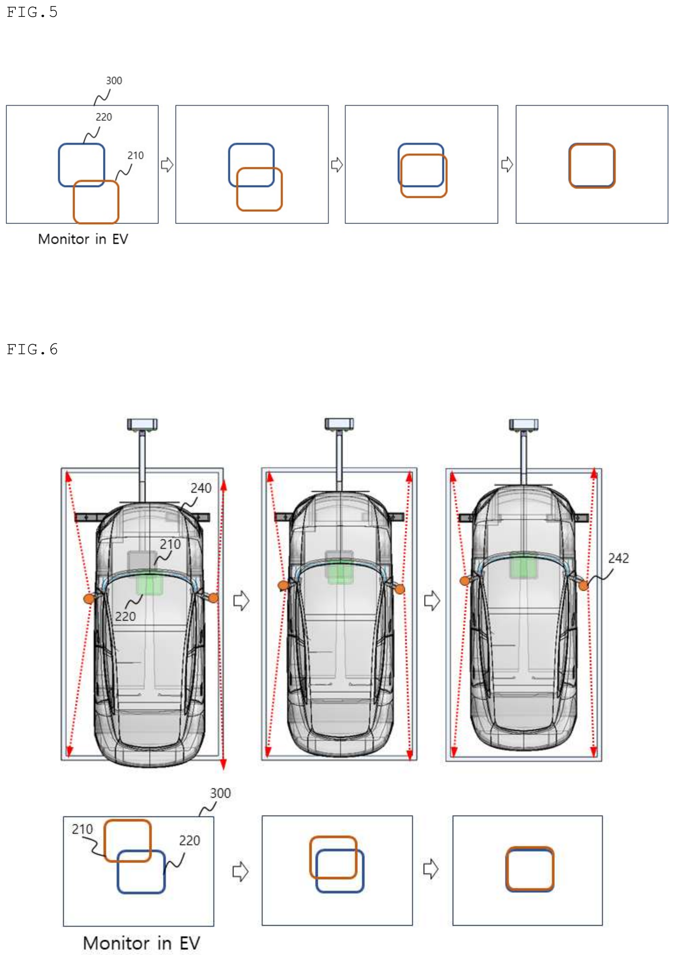

FIG. 5 is a diagram illustrating a process of aligning the transmitter pad and the receiver pad, which is displayed on the monitor in the electric vehicle upon parking, according to an embodiment of the present disclosure. The electric vehicle 240 according to an embodiment of the present disclosure includes a monitor 300, and displays a relative location between the receiver pad 220 and the transmitter pad 210, which is calculated in real time, on the monitor 300 in order to induce a driver to park the electric vehicle so that the transmitter pad and the receiver pad are horizontally aligned.

More specifically, the electric vehicle 240 displays the relative location between the receiver pad 220 and the transmitter pad 210 on the basis of the location of the receiver pad 220 fixed on the monitor 300, and may display a change in the location of the transmitter pad 210 in real time by incorporating the relative location of the transmitter pad 210 that is calculated in real time. Referring to FIG. 5, the relative location of the transmitter pad 210 to the receiver pad 220, which is changed as the electric vehicle moves, is calculated in real time. The results of the calculation are incorporated and displayed on the monitor 300. Accordingly, a driver can accurately park the electric vehicle so that the transmitter pad 210 and the receiver pad 220 are horizontally aligned while viewing the monitor 300.

In addition to manual parking, the electric vehicle 240 having an automatic parking function may operate the automatic parking function so that the receiver pad 220 and the transmitter pad 210 are horizontally aligned. That is, the electric vehicle 240 includes the automatic parking function, performs automatic parking by recognizing the location of a parking line upon parking, but may perform automatic parking so that the transmitter pad and the receiver pad are horizontally aligned by calculating the relative location of the transmitter pad 210 to the receiver pad 220 that is attached to the electric vehicle.

Rear parking may be required and head-on parking may be possible, depending on the structure or space of the parking area 200. In the wireless charging system according to an embodiment of the present disclosure, the location at which the transmitter pad 210 is installed may be different because a rear parking area and a head-on parking area are divided. In general, it is preferred that the transmitter pad 210 is installed at a front part of a parking area upon head-on parking and the transmitter pad 210 is installed on the entrance side of a parking area upon rear parking because the receiver pad 220 is attached near the front wheel of an electric vehicle. The wireless charging platform may lead the electric vehicle 240 so that head-on parking or rear parking is performed depending on a condition for each parking area for smooth wireless charging.

FIG. 6 is a diagram illustrating an overall process in which the transmitter pad installed in a head-on parking-dedicated parking area and the receiver pad are horizontally aligned in the wireless charging system for an electric vehicle according to an embodiment of the present disclosure. In order for the electric vehicle to be accurately parked at the center of the parking area, it is preferred that the location of the transmitter pad 210 is disposed near a stopper 203. In this case, the electric vehicle 240 may receive information on the relative location of the transmitter pad 210 to the parking line 202 through communication with the inverter 230 while forward entering the parking area, and may perform parking so that the transmitter pad and the receiver pad are horizontally aligned based on the received information.

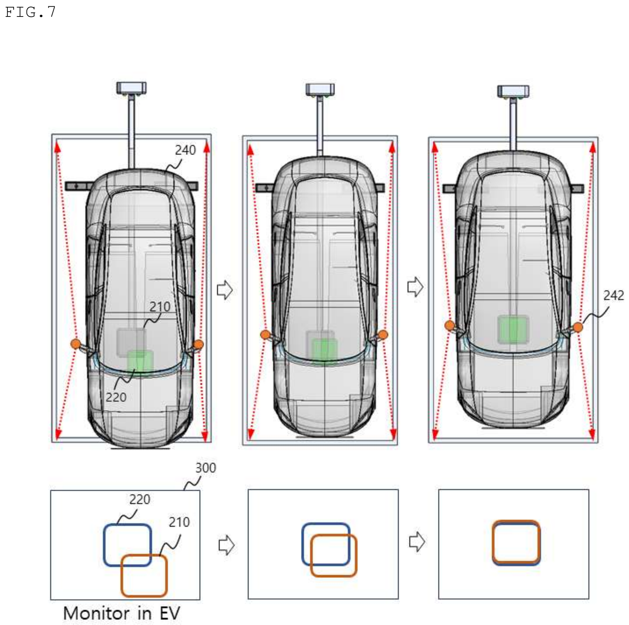

FIG. 7 is a diagram illustrating an overall process in which the transmitter pad installed in a rear parking-dedicated parking area and the receiver pad are horizontally aligned in the wireless charging system according to an embodiment of the present disclosure. In this case, it is preferred that the transmitter pad 210 is disposed on the entrance side of the parking area. The electric vehicle may receive information on the relative location of the transmitter pad 210 to the parking line through communication with the inverter 230 while backward entering the parking area, and may perform parking so that the transmitter pad and the receiver pad are horizontally aligned based on the received information.

In this case, the stopper 203 installed in the parking area is not for determining the parking location of the electric vehicle, but plays a role to limit the electric vehicle so that the electric vehicle does not fall outside a parking range. The reason for this is that the size of an electric vehicle, the location at which the receiver pad 220 is attached within an electric vehicle, and the location of the transmitter pad 210 installed within a parking area have not been standardized.

The electric vehicle 240 according to an embodiment of the present disclosure basically performs horizontal alignment by calculating the relative location of the transmitter pad 210 to the receiver pad 220 in real time as described above, but may correct a horizontal alignment error while finely moving the location of the electric vehicle in a direction in which the output of the receiver coil 222 is maximized by applying a predetermined current to the transmitter pad 210 and sensing the output of the receiver coil 222 for more precise horizontal alignment during an alignment process.

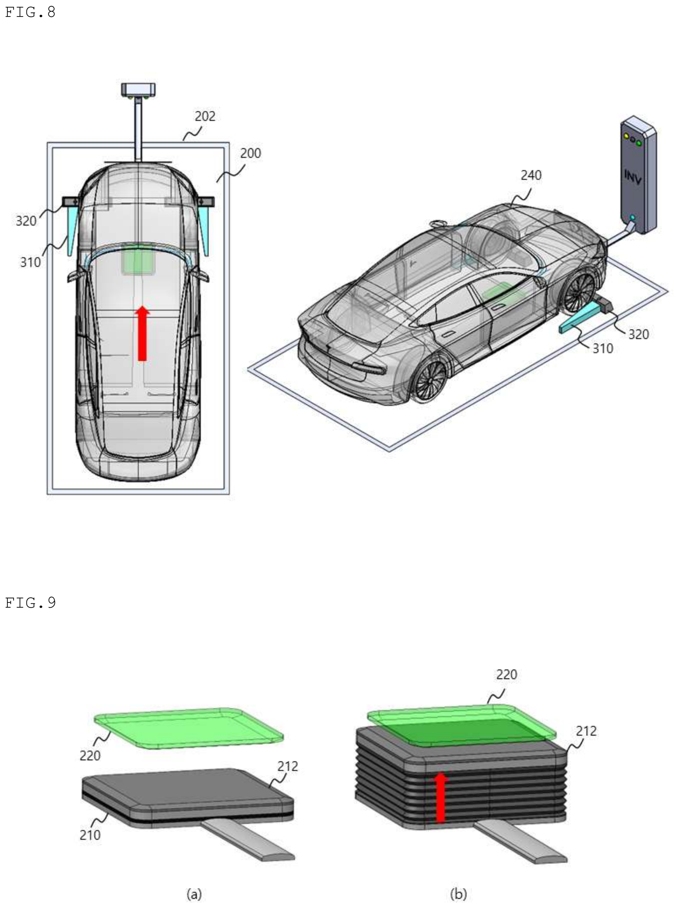

FIG. 8 is a diagram for describing a construction and operation method for horizontal alignment at a home parking lot in the wireless charging system according to another embodiment of the present disclosure.

Referring to FIG. 8, in the horizontal alignment method according to another embodiment of the present disclosure, wheel guides 310 and stoppers 320 that hold the stop location of the electric vehicle upon parking are additionally installed on both sides of the parking area 200 in the entrance direction of the electric vehicle in the parking area 200. Horizontal alignment between the receiver pad 220 and the transmitter pad 210 may be automatically performed upon parking by using the wheel guides 310 and the stoppers 320.

More specifically, when the electric vehicle 240 is parked, the wheels of the electric vehicle enter a predetermined location by the wheel guides 310. When the electric vehicle 240 is parked so that the stoppers 320 come into contact with the wheels, the receiver pad 220 of the electric vehicle 240 and the transmitter pad 210 may be horizontally aligned. Such a method has an advantage in that horizontal alignment can be simply performed even without a complex process compared to the horizontal alignment method. However, such a case may be applied to a case in which the location of the transmitter pad 210 has been previously set within a parking area by considering the size of a specific electric vehicle and the location at which the receiver pad 220 is attached.

Accordingly, the horizontal alignment method according to another embodiment of the present disclosure may be preferably applied for charging convenience of a specific electric vehicle when parking is performed for a personalized parking space, such as home. In this case, it is preferred that an electric vehicle performs head-on parking. A vertical alignment method and an FOD method between the transmitter pad 210 and the receiver pad 220, which are described hereinafter, may also be identically applied to the case of the wireless charging system for an electric vehicle illustrated in FIG. 8.

In an embodiment of the present disclosure, the wireless charging system for an electric vehicle can maximize power transmission efficiency by additionally performing vertical alignment between the transmitter pad 210 and the receiver pad 220 when horizontal alignment is completed.

Referring to FIG. 9, the transmitter pad 210 according to an embodiment of the present disclosure includes the transmitter coil 212 capable of a vertical movement on the transmitter pad 210. Accordingly, vertical alignment can be performed so that the transmitter coil 212 and the receiver pad 220 have a predetermined air gap by adjusting the height of the transmitter coil 212. The height of the transmitter coil may be fixed to a preset air gap, but the height of the transmitter coil 212 may be adjusted in real time so that charging efficiency is maximized depending on surrounding environment conditions, such as a voltage or temperature of a battery. To this end, the wireless charging system for an electric vehicle according to an embodiment of the present disclosure may previously collect and store information on an optimal height of the transmitter coil 212 according to at least one surrounding environment factor.

In this case, in an embodiment of the present disclosure, a distance between the transmitter coil 212 and the receiver pad 220 may be controlled within a predetermined size (e.g., 20 mm) in order to prevent the inflow of an external metallic foreign substance during charging and to maintain the influence of a magnetic field on an external creature within a reference value or less.

Furthermore, as in the fine horizontal alignment, the wireless charging platform may operate to drive the inverter 230 so that the inverter applies a predetermined current to the transmitter coil when vertical alignment is started and to perform fine vertical alignment up to a point at which the output of the receiver coil 222 is maximized by sensing the output of the receiver coil 222.

Furthermore, it is preferred that vertical alignment is performed so that a soft switching condition for the inverter 230 is satisfied in a way that the transmitter pad 210 performs tuning while gradually raising the height of the transmitter coil from an original location of the transmitter coil during a process of adjusting the height of the transmitter coil 212. For example, in order to satisfy the soft switching condition for the inverter 230, the tuning needs to be performed in a way that leakage inductance is reduced. That is, the soft switching is guaranteed only when a resonant frequency on the transmission (TX) side is placed at a lower location than a switching frequency. When the air gap is increased, the leakage inductance is increased, and the resonant frequency is formed on the lower side. When the air gap is slightly reduced, the leakage inductance is gradually reduced, and the resonant frequency is gradually increased. When the resonant frequency reaches a predetermined range in which the resonant frequency is lower than the switching frequency, the tuning is stopped. In this case, a rectifier that rectifies the output of the receiver coil may be provided. A phase difference between the voltage and current of the rectifier may be detected. Fine vertical alignment between the transmitter coil 212 and the receiver pad 220 may be performed based on the phase difference.

The wireless charging system for an electric vehicle starts charging when the vertical alignment of the transmitter coil 212 with the receiver coil 222 is completed. When the air gap between the transmitter coil and the receiver coil is changed by a predetermined value or more because the height of the electric vehicle is changed due to a reason, such as that a person gets out of the electric vehicle or gets on the electric vehicle, during charging, the wireless charging system may temporarily stop the charging and then start the charging after adjusting the height of the transmitter pad 210 again.

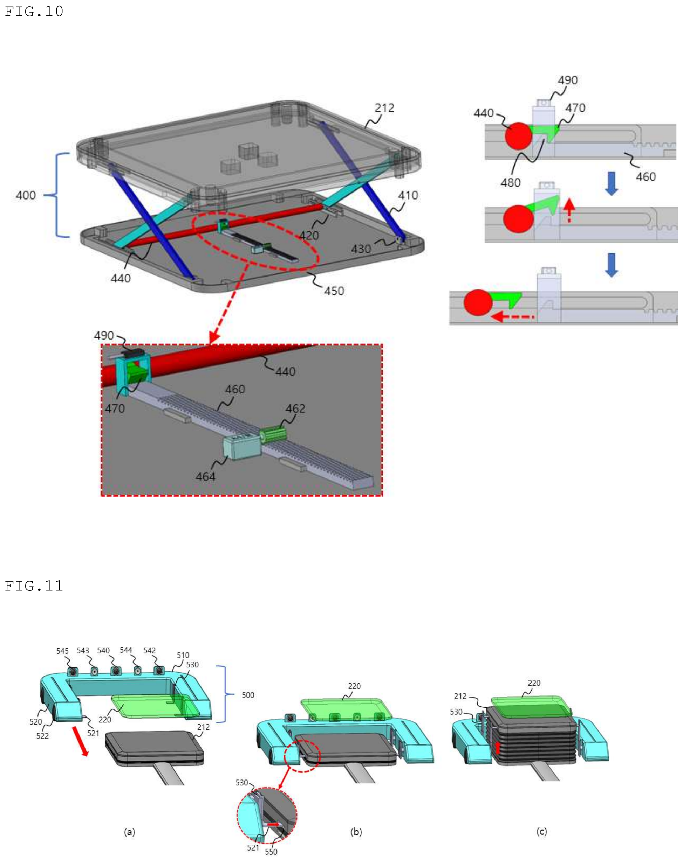

FIG. 10 is a diagram that exemplifies the structure of the transmitter pad for the vertical alignment illustrated in FIG. 9.

In an embodiment of the present disclosure, the transmitter pad 210 may be implemented to include the transmitter coil thereon, a structure capable of adjusting the height of the transmitter coil, and a self-driving unit for driving the structure so that the height of the transmitter pad is autonomously adjusted.

Referring to FIG. 10, the height adjustment device 400 of the transmitter pad 210 according to an embodiment of the present disclosure includes an X-lift 410 including two X-shaped structures disposed between the bottom plate and transmitter coil 212 of the transmitter pad 210. Four upper, lower, left, and right structures on one side of the X-lift 410 may be implemented with fixed bearings 430. Four upper, lower, left, and right structures on the other side of the X-lift 410 may be implemented with sliding bearings 420.

Furthermore, the X-lift 410 includes a connection bar 440 that connects structures connected to two of the four sliding bearings 420, and may be constructed to be driven by pushing or pulling the connection bar 440. To this end, the height adjustment device 400 may include a rectilinear driving unit 450 that pushes or pulls the connection bar 440. For example, when the rectilinear driving unit 450 pushes the connection bar 440, the structures of the X-lift 410 connected to the sliding bearings 420 are slid to lower the height of the transmitter coil 212. When the rectilinear driving unit 450 pulls the connection bar 440, the height of the transmitter coil 212 is raised.

In this case, the rectilinear driving unit 450 that drives the connection bar 440 is connected between the connection bar 440 and the bottom plate of the transmitter pad 210, and may be constructed by using a bolt-nut method or a rack-pinion structure. For example, the rack-pinion rectilinear driving unit 450 may fix one side of a rack gear 460 to the connection bar 440, and the other side of the rack gear 460 may be configured to perform a rectilinear motion through linear bearings provided at the bottom of the transmitter pad 210. Furthermore, the height adjustment device 400 may include a deceleration gear having a predetermined gear ratio with respect to a pinion gear 462 corresponding to the rack gear 460 and a motor 464, and may be implemented to adjust the height of the transmitter coil 212 by pushing or pulling the rack gear 460.

In an embodiment of the present disclosure, the X-lift 410 may further include fixing means for fixing the structure so that the structure is not moved after alignment with the receiver coil 222 is completed by adjusting the height of the transmitter coil 212. The fixing means may be implemented to be manually or automatically released depending on situations so that the transmitter coil 212 falls to an original point location.

For example, the rack-pinion rectilinear driving unit 450 may include a ring 470 configured to be pressed by a spring when the rack gear 460 is connected to the connection bar 440. A groove 480 is formed in the rack gear 460. The rack gear 460 may be configured so that the connection bar 440 performs a rectilinear motion when the ring 470 is engaged with the groove 480. Furthermore, an electromagnet 490 is provided on the ring 470. In case of emergency, the ring 470 is raised by operating the electromagnet 490. Accordingly, the ring 470 and the rack gear 460 may be separated from each other, and the transmitter coil 212 naturally falls by gravity and returns to its original location.

Such a construction provides an additional effect that prevents damage to the X-lift 410 when the transmitter coil 212 is excessively pressed by an external force.

According to another embodiment, the threads of the rack gear 460 and the pinion gear 462 may be formed to have a gentle slope. The pinion gear 462 may be configured to have a state in which the pinion gear has been pressed by the spring without being fixed. Accordingly, when predetermined pressure or more is applied from the top of the transmitter coil 212, the X-lift 410 may be implemented to automatically fall as the pinion gear 462 is lifted and slipped.

Although not illustrated in the drawings, the rectilinear driving unit may include a bolt and a nut. In this case, one end of the bolt is fixed to the connection bar 440, but is connected thereto so that the bolt can be freely rotated. The other end of the bolt may be fixed to the bottom plate of the transmitter pad 210 by the nut fastened to the bolt. Furthermore, a gear is formed in the bolt, and a deceleration gear having a predetermined gear ratio corresponding to the gear and a motor are provided in the bottom plate of the transmitter pad 210. Accordingly, the height of the transmitter coil 212 may be implemented to be adjusted by pushing or pulling the connection bar 440 as the motor rotates the bolt.

Like the rack-pinion rectilinear driving unit, the bolt-nut rectilinear driving unit may further include fixing means based on the ring-groove structure. Likewise, the ring-groove structure may be configured to be released through the electromagnet.

In the rectilinear driving unit, interference may occur in the electric vehicle 240 upon parking because the entire height of the transmitter pad 210 is excessively raised at the basic height of the transmitter pad 210, that is, even when the transmitter coil 212 falls and is placed at the original location, depending on the arrangement of the motor-decelerator assembly or other instrument. In such a case, the entire height of the transmitter pad 210 may be lowered by stretching the motor-decelerator assembly to the outside of the transmitter coil 212 and extending the rack gear. In this case, the transmitter pad 210 is further extended in a direction on one side thereof. Accordingly, the transmitter pad 210 may be implemented in a form in which a total size of the transmitter pad has an increased area as illustrated in FIG. 2.

FIG. 11 is a diagram for describing a vertical alignment method for the transmitter coil using a pad aligner according to another embodiment of the present disclosure.

In another embodiment of the present disclosure, the transmitter pad 210 includes a movable pad aligner 500 that adjusts the height of the transmitter coil 212 on the outside. When a charging request is received from a specific electric vehicle, vertical alignment may be performed so that the air gap between the receiver coil 222 and the transmitter coil 212 is constantly maintained by invoking the movable pad aligner 500 and adjusting the height of the transmitter coil 212.

That is, in the vertical alignment method according to another embodiment of the present disclosure, direct driving means for vertical alignment between the transmitter coil 212 and the receiver coil 222 is disposed outside the transmitter pad 210 not within the transmitter pad 210. Multiple (e.g., 20 to 50) wireless chargers can be aligned by using one pad aligner 500. Accordingly, there are advantages in that the size of the transmitter pad 210 can be minimized, a structure can be simplified, system efficiency can be improved, and a manufacturing cost price can be reduced.

To this end, referring to FIG. 11, the pad aligner 500 may basically include a traveling driving unit 522 capable of a direction change, a body 510, two arms 520, one or more forks 521 provided inside each arm 520, an elevation driving unit 530 that raises the arm 520 or the fork 521, one or more cameras 540, a lidar sensor 542, lighting devices 543 and 544, a thermal imaging camera 545, and a pad aligner controller (not illustrated) including wireless communication. The pad aligner 500 according to an embodiment of the present disclosure includes the cameras 540 and the thermal imaging camera 545, and can inspect whether a foreign substance is present on the transmitter pad 210 or the receiver pad 220 even without using a separate expensive FOD device by using the cameras 540 and the thermal imaging camera 545. This is described in detail during the course of describing an FOD method according to an embodiment of the present disclosure.

In an embodiment of the present disclosure, the pad aligner 500 moves to a parking area in which an electric vehicle that requires charging is disposed in an autonomous manner by using the lidar sensor 542 and the cameras 540, approaches the transmitter pad 210 through the lighting devices 543 and 544 and the cameras 540, and then may perform vertical alignment on the receiver coil 222 by deploying the fork 521 to both sides of the transmitter pad 210 and moving the transmitter coil 212.

Furthermore, the pad aligner 500 may be designed to facilitate work that raises and moves the transmitter coil 212.

In this case, the pad aligner 500 may also be configured to easily perform vertical alignment on the receiver coil 222 by raising and moving the transmitter coil 212. For example, the pad aligner 500 protrudes by being integrally fixed to the body 510 so that the two arms 520 can easily raise and move the transmitter coil 212. The fork 521 provided inside each arm 520 may have a function for stretching and pulling out the fork 521 so that the fork 521 can hold the transmitter coil 212. Furthermore, the fork 512 may be implemented to rise and fall in the vertical direction in order to adjust the location of the transmitter coil 212.

Accordingly, referring to FIGS. 11(A) to 11(C), after approaching the transmitter pad 210, the pad aligner 500 holds and raises the transmitter coil 212, more specifically, a plate that constitutes the transmitter coil 212, by deploying the fork 521 toward the transmitter pad 210. Thereafter, the pad aligner 500 performs vertical alignment by vertically moving the transmitter coil 212, and then performs a series of vertical alignment processes of returning the fork 521 to its original location.

The transmitter pad 210 may include two or more grooves or protrusions 550 on the side thereof so that the fork 521 of the pad aligner 500 can raise the transmitter coil 212.

Furthermore, although not clearly illustrated in the drawings, the transmitter pad 210 may be implemented to have a structure capable of vertically moving the transmitter coil 212. Fixing means that fixes the structure after alignment with the receiver coil 222 is completed by moving the transmitter coil 212 by the pad aligner 500 may be further provided.

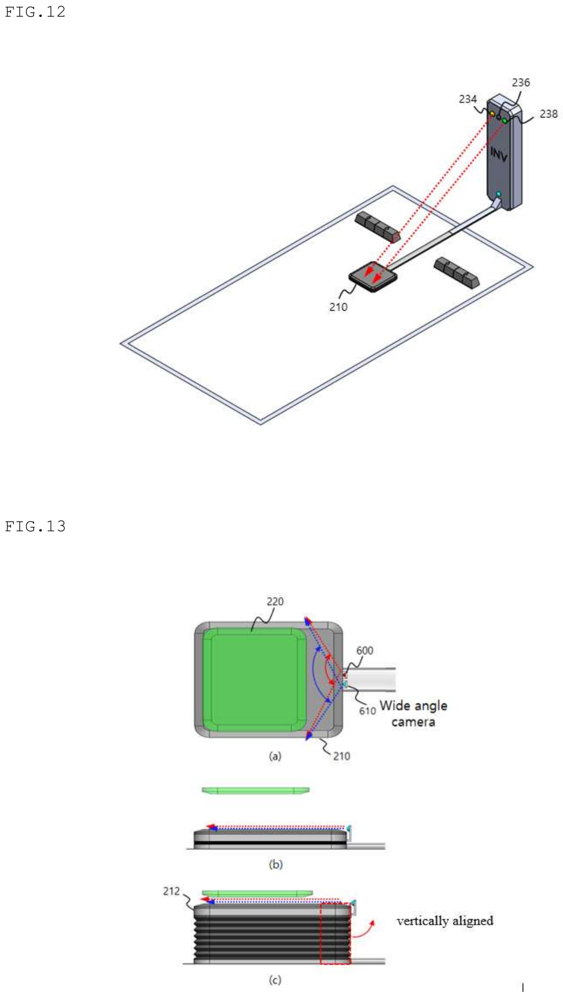

FIGS. 12 and 13 are diagrams for describing an FOD method according to an embodiment of the present disclosure.

**As** described above, the wireless charging system for an electric vehicle according to an embodiment of the present disclosure is implemented to inspect whether a foreign substance is present on the transmitter pad 210 or the receiver pad even without a separate complex and expensive FOD device. Furthermore, the size of the transmitter pad 210 can be reduced, system efficiency can be improved, and a manufacturing cost for the entire wireless charging system can be reduced because functions, such as the FOD function, are separately implemented outside the transmitter pad 210.

**To** this end, the wireless charging system for an electric vehicle according to an embodiment of the present disclosure can inspect whether a foreign substance has been attached on the transmitter pad 210 or below the receiver pad prior to or during the charging of an electric vehicle by using the structure of the inverter 230 disposed in a parking area.

First, referring to FIG. 12, in an embodiment of the present disclosure, the inverter 230 is installed outside the parking area, and includes the camera 234 and a lighting device 236 directed toward the transmitter pad 210. Accordingly, the inverter 230 may perform FOD inspection prior to the start of charging. More specifically, the inverter 230 may be installed so that the camera 234 and the lighting device 236 have a predetermined height or more from the floor of the parking area in order for the top of the transmitter pad 210 to be well monitored by the camera 234. Through such a construction, the inverter 230 may be implemented to inspect and determine whether a metallic foreign substance is present on the transmitter pad 210 in a visual way by using the camera 234 when an electric vehicle is not present in the parking area.

The inverter 230 may perform analysis by using big data related to a shape or color of a metallic foreign substance in performing metallic FOD. Furthermore, the accuracy of FOD can be gradually improved because the inverter continuously learns result data during such an analysis process.

According to another embodiment, the inverter 230 is installed outside the parking area, and may perform FOD inspection by using the thermal imaging camera 238 directed toward the transmitter pad 210. More specifically, the inverter 230 is installed so that the thermal imaging camera 238 has a predetermined height or more from the floor surface of the parking area in order for the top of the transmitter pad 210 to be easily monitored by the thermal imaging camera 238. When an electric vehicle is not present in the parking area, the inverter 230 may inspect whether a heating point attributable to a metallic foreign substance is present on the transmitter pad 210 through the thermal imaging camera 238 by periodically applying a current to the transmitter coil 212. In this case, the inverter 230 may be configured to separately analyze heating attributable to a metallic foreign substance and the heating of the transmitter coil 212 itself.

**When** determining that a foreign substance is present on the transmitter pad 210, the inverter 230 may transmit a warning message, reading that a driver who approaches for charging should remove the foreign substance prior to parking, to the electric vehicle 240. When the driver removes the foreign substance, the inverter 230 performs FOD inspection again, and notifies the electric vehicle 240 of the state in which the electric vehicle can be charged. Thereafter, when the electric vehicle 240 is parked in the parking area, the inverter 230 may control the electric vehicle 240 so that charging can be started.

Furthermore, referring to FIG. 13, the transmitter pad 210 according to an embodiment of the present disclosure includes one or more second thermal imaging cameras 600 or second cameras 610 that protrude from the top of the transmitter coil 212 within a predetermined distance or less (e.g., within 10 mm) outside the transmitter coil 212, and may inspect whether a heating point attributable to a metallic foreign substance or an external creature is present between the transmitter pad 210 and the receiver pad 220 during the charging of an electric vehicle in real time inspect. Although not illustrated in FIG. 13, the second camera 610 may include a lighting device like the camera of the inverter 230.

In this case, it is preferred that the second thermal imaging cameras 600 and the second cameras 610 provided along with the transmitter coil 212 are configured to observe a space between the transmitter pad and the receiver pad without a blind spot. To this end, as illustrated in FIG. 13(A), the cameras are formed to gather at an outside central part of the transmitter coil 212 and to protrude therefrom, and may be implemented with wide-angle cameras capable of securing a wide viewing angle.

In the embodiment of the present disclosure, a method of reducing the entire height of the transmitter pad 210 by disposing a driving unit for vertical alignment, for example, the motor-decelerator assembly outside the transmitter coil 212 and extending the rack gear has been proposed as a method of reducing the entire height of the transmitter pad 210. In the case of such a construction, a clearance is formed because the transmitter pad 210 is lengthened in a direction on one side thereof. In an embodiment of the present disclosure, preferably, as illustrated in FIG. 13(C), the second thermal imaging cameras 600 and the second cameras 610 may be installed by using the clearance.

According to such an installation method, there is an effect in that a space between the transmitter pad and the receiver pad can be more accurately observed even in the situation in which a distance between the transmitter pad and the receiver pad is variously changed upon vertical alignment because the size of each electric vehicle or the location at which the receiver pad is installed is different.

According to another embodiment, the inverter 230 includes a third thermal imaging camera or a third camera and a third lighting device at the height where the air gap between the transmitter coil 212 and the receiver pad 220 can be observed, and may be implemented to inspect whether a heating point attributable to a metallic foreign substance is present between the transmitter coil 212 and the receiver pad 220 or whether an external creature is sensed nearby during charging.

The wireless charging system for an electric vehicle according to an embodiment of the present disclosure includes at least one or more pieces of means, among the camera or the thermal imaging camera illustrated in FIGS. 12 and 13, and may inspect whether a metallic foreign substance is present on the transmitter pad 210. Furthermore, the wireless charging system may also implement the LOD function in addition to the FOD function by using the means.

The wireless charging system for an electric vehicle according to an embodiment of the present disclosure may be configured to inspect whether a metallic foreign substance is present through the pad aligner 500 when alignment is performed by using the pad aligner 500 as illustrated in FIG. 11.

For example, the pad aligner 500 may inspect whether a foreign substance is attached on the transmitter pad 210 or below the receiver pad 220 by using the camera 540 and the lighting devices 543 and 544 included in the pad aligner.

Furthermore, the pad aligner may determine whether a metallic foreign substance is present by detecting a heating point on the transmitter pad 210 through the thermal imaging camera 545 when the inverter 230 applies a current to the transmitter coil.

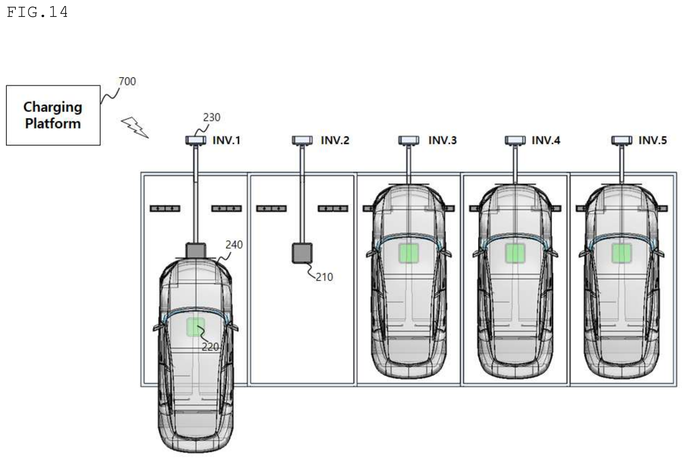

FIG. 14 is a diagram for describing a structure and charging process for the wireless charging system for an electric vehicle according to an embodiment of the present disclosure.

The wireless charging system for an electric vehicle according to an embodiment of the present disclosure includes one or more wireless charging parking areas in each of which the transmitter pad 210 and the inverter 230 are installed. Such wireless charging parking areas gather to form a wireless charging parking zone. In this case, a procedure in which an electric vehicle that requires wireless charging enters the wireless charging parking zone and performs charging is as follows.

While an electric vehicle is not parked in the wireless charging parking area, the inverter 230 inspects whether a metallic foreign substance is present on the transmitter pad 210 by using the camera 234 and the thermal imaging camera 238 embedded in the inverter 230.

When a specific electric vehicle enters the wireless charging parking zone for wireless charging, the electric vehicle is parked by selecting a parking area in which a foreign substance on the transmitter pad is not detected, among empty parking areas, or is parked after a foreign substance is removed when the foreign substance on the transmitter pad is detected.

The inverter 230 corresponding to a corresponding parking area recognizes the number of a corresponding electric vehicle 240, and starts communication through pairing with a unique communication ID that is previously assigned in accordance with the number of the electric vehicle. The inverter 230 identifies the charging intention of the electric vehicle 240, and performs a charging process when identifying the charging intention. To this end, a wireless charging platform 700 performs communication between a smartphone of a user who requests charging and the inverter 230. Thereafter, when receiving a charging request from the electric vehicle 240 or the smartphone of the user who owns the electric vehicle 240, the wireless charging platform 700 shares the charging request with the inverter 230 through communication and performs a charging procedure.

The electric vehicle 240 recognizes front and side parking lines by using the parking line recognition function and also collects information on a relative location of the transmitter pad 210 to the inverter 230 through communication with the inverter 230.

The electric vehicle 240 recognizes the horizontal alignment state between the transmitter pad 210 and the receiver pad 220 by calculating the relative location of the transmitter pad 210 to the receiver pad 220 in real time based on the recognition information of the front and side parking lines and information on the location of the transmitter pad 210 that is collected from the inverter 230.

The electric vehicle 240 displays the receiver pad 220 at the center of the monitor 300 within the electric vehicle, and displays the relative location of the transmitter pad 210 in the parking area on a screen in accordance with the display of the receiver pad.

The driver manually parks the electric vehicle 240 with reference to the monitor 300 or automatically parks the electric vehicle 240 by using the automatic parking function so that the receiver pad 220 of the electric vehicle is horizontally aligned with the transmitter pad 210 of the parking area.

Thereafter, the inverter 230 applies a predetermined current to the transmitter coil 212. The electric vehicle 240 is finely aligned in the X-Y axis by searching for a point at which the output of the receiver coil 222 is maximized.

When the horizontal alignment is completed, the wireless charging system for an electric vehicle additionally performs vertical alignment between the receiver pad 220 and the transmitter pad 210.

In this case, the transmitter pad 210 includes the transmitter coil 212 capable of a vertical movement thereon. Accordingly, the vertical alignment with the receiver pad 220 can be performed by adjusting the height of the transmitter coil 212.

In another embodiment, the transmitter pad 210 includes the movable pad aligner 500 that adjusts the height of the transmitter coil 212 outside the transmitter pad. When receiving a charging request from a specific electric vehicle, the wireless charging system for an electric vehicle may perform vertical alignment so that the air gap between the receiver coil 222 and the transmitter coil 212 is constantly maintained by invoking the movable pad aligner 500 and adjusting the height of the transmitter coil 212.

Likewise, precise vertical alignment may be performed in a way that the transmitter pad 210 senses the output of the receiver coil 222 according to a predetermined current that is applied from the inverter 230 to the transmitter coil 212 upon vertical alignment and the height of the transmitter coil 212 is finely adjusted in a direction in which the output of the receiver coil 222 is maximized based on the results of the sensing.

When both the horizontal alignment and the vertical alignment with the receiver coil 222 are completed, the inverter 230 starts charging through communication with the electric vehicle 240. When an environmental change, such as a temperature or humidity, occurs during the charging or when an air gap between the transmitter pad 210 and the receiver pad 220 is changed by a predetermined value or more because the height of the electric vehicle is changed due to a factor, such as that a user gets on or out of the electric vehicle, the inverter 230 temporarily stops the charging and performs an alignment process again.

It is possible to inspect whether a metallic foreign substance is present on the transmitter pad 210 whether a creature is present nearby by using the thermal imaging camera and the camera included in the inverter 230, the transmitter pad 210, or the pad aligner 500 even in the state in which the electric vehicle 240 is being charged. In this case, when a metallic foreign substance is present on the transmitter pad 210 or a creature is sensed nearby, the inverter 230 immediately stops the charging.

When the charging is completed, the inverter 230 checks the billing function of the electric vehicle 240 and then performs a fee settlement procedure.

The processes in FIG. 14 have been described as being sequentially executed, but the present disclosure is not essentially limited thereto. In other words, the processes described with reference to FIG. 14 may be changed and executed or one or more of the processes may be executed in parallel. Accordingly, FIG. 14 is not limited to the time-series sequence.

The embodiments of the disclosure have been disclosed in this specification and drawings. Although specific terms have been used in this specification and drawings, they are merely used in common meanings in order to easily describe the technical contents of the disclosure and are not intended to limit the scope of the disclosure. It is evident to a person having ordinary knowledge in the art to which the disclosure pertains that in addition to the disclosed embodiments, other modified examples based on the technical spirit of the disclosure may be practiced.

**[Description of reference numerals]**

| | | | |
|---|---|---|---|
| 100, 200: | parking area | 102, 202: | parking line |
| 110, 210: | transmitter pad | | |
| 112, 212: | transmitter coil | | |
| 120, 220: | receiver pad | | |
| 122, 222: | receiver coil | | |
| 130, 230: | inverter | 132, 232: | charging cable |
| 203, 320: | stopper | 234: | camera |
| 236: | lighting device | 238: | thermal imaging camera |
| 240: | electric vehicle | 242: | electric vehicle camera |
| 300: | monitor | 310: | wheel guide |
| 400: | height adjustment device | 410: | X-lift |
| 420: | sliding bearing | 430: | fixed bearing |
| 440: | connection bar | | |
| 450: | rectilinear driving unit | | |
| 460: | rack gear | 462: | pinion gear |
| 464: | motor | 470: | ring |
| 480: | groove | 490: | electromagnet |
| 500: | pad aligner | 510: | aligner body |
| 520: | arm | 521: | fork |
| 522: | driving unit | 530: | elevation driving unit |
| 540: | camera | 542: | lidar sensor |
| 543, 544: | lighting device | | |
| 545: | thermal imaging camera | | |
| 600: | second thermal imaging camera | | |
| 610: | second camera | | |
| 700: | wireless charging platform | | |

## Claims

1. A wireless charging system for an electric vehicle, comprising:
a parking area in which a parking line is indicated;
a transmitter pad installed in the parking area;
an inverter configured to supply AC power to the transmitter pad and having a communication function;
an electric vehicle having a parking line recognition function using a camera and a communication function;
a receiver pad attached to a bottom surface of the electric vehicle; and
a wireless charging platform,
wherein the electric vehicle memorizes a location at which the receiver pad is attached within the electric vehicle,
the inverter memorizes a location of the transmitter pad based on the parking line in the parking area, and
when the electric vehicle enters the parking area for charging, the electric vehicle recognizes a horizontal alignment state between the receiver pad and the transmitter pad by calculating a relative location of the transmitter pad to the receiver pad in real time by recognizing the parking line using the camera while communicating with the inverter.

2. The wireless charging system of claim 1, wherein the electric vehicle comprises a monitor, displays a fixed location of the receiver pad on the monitor upon parking, calculates the relative location of the transmitter pad to the receiver pad, and displays results of the calculation on the monitor so that a driver is induced to park the electric vehicle so that the transmitter pad and the receiver pad are horizontally aligned while viewing the monitor.

3. The wireless charging system of claim 1, wherein the electric vehicle comprises an automatic parking function, performs automatic parking by recognizing a location of the parking line upon parking, and performs the automatic parking so that the transmitter pad and the receiver pad are horizontally aligned by calculating the relative location of the transmitter pad to the receiver pad attached to the electric vehicle.

4. The wireless charging system of claim 1, wherein:
the electric vehicle performs parking so that the transmitter pad and the receiver pad are horizontally aligned by calculating the relative location of the transmitter pad to the receiver pad,
the inverter is driven when the electric vehicle starts to enter the parking area for horizontal alignment and applies a predetermined current to a transmitter coil, and
the electric vehicle senses an output of a receiver coil according to the predetermined current applied to the transmitter coil while the horizontal alignment is performed, and corrects a horizontal alignment error between the transmitter pad and the receiver pad while finely moving a location of the electric vehicle in a direction in which the output of the receiver coil is maximized based on results of the sensing.

5. The wireless charging system of claim 1, wherein the inverter that is installed outside the parking area and that supplies power to the transmitter pad comprises a camera installed toward the electric vehicle, recognizes an ID of the electric vehicle by recognizing a number of the electric vehicle when the electric vehicle enters the parking area, performs communication with the electric vehicle in real time through pairing between the inverter and the electric vehicle, identifies whether there is intention to charge the electric vehicle, and performs a charging process when the intention is present.

6. The wireless charging system of claim 1, wherein:
the electric vehicle performs parking so that the transmitter pad and the receiver pad are horizontally aligned by calculating the relative location of the transmitter pad to the receiver pad,
the inverter comprises a camera installed toward the electric vehicle, inspects a left and right alignment state of the electric vehicle by using the camera included in the inverter when the electric vehicle starts to enter the parking area for horizontal alignment, and supports that the electric vehicle is able to accurately perform left and right alignment through communication.

7. The wireless charging system of claim 1, wherein the transmitter pad comprises a transmitter coil capable of a vertical movement on the transmitter pad, and is configured to be vertically aligned with the receiver pad by adjusting a height of the transmitter coil in a direction in which charging efficiency is maximized.

8. The wireless charging system of claim 7, wherein the transmitter pad is configured to be vertically aligned in a state in which a soft switching condition for the inverter is satisfied by performing tuning while raising the height of the transmitter coil by stages by a predetermined size.

9. The wireless charging system of claim 7, wherein:
the transmitter pad comprises an X-lift, having two X-shaped structures between a bottom plate of the transmitter pad and the transmitter coil, as a height adjustment structure,
the X-lift comprises fixed bearings at one end thereof and sliding bearings on the other side thereof and comprises a connection bar that connects structures connected to two sliding bearings on a lower side thereof, wherein the X-lift is configured to be driven by pushing or pulling the connection bar, and
the X-lift comprises a rectilinear driving unit connected to the connection bar and configured to push or pull the connection bar.

10. The wireless charging system of claim 9, wherein:
the rectilinear driving unit has a rack-pinion construction and comprises a fixed device comprising an electromagnet, and
in case of emergency, the rectilinear driving unit is configured to release the fixing device by the electromagnet so that the transmitter coil falls down by gravity and returns to its original groove location.

11. The wireless charging system of claim 1, wherein:
the inverter comprises a camera and a lighting device that are disposed outside the parking area and installed toward the transmitter pad,
the inverter is installed so that the camera and the lighting device have a predetermined height or more from a floor surface of the parking area in order for a top of the transmitter pad to be easily monitored by the camera, and
the inverter is configured to inspect whether a foreign substance is present on the transmitter pad through the camera when an electric vehicle is not present in the parking area.

12. The wireless charging system of claim 1, wherein:
the inverter comprises a thermal imaging camera that is installed outside the parking area and directed toward the transmitter pad,
the inverter is installed so that the thermal imaging camera has a predetermined height or more from a floor surface of the parking area in order for a top of the transmitter pad to be easily monitored by the thermal imaging camera, and
the inverter inspects whether a heating point attributable to a metallic foreign substance is present on the transmitter pad through the thermal imaging camera by periodically applying a current to a transmitter coil when an electric vehicle is not present in the parking area, and inspects the heating point separately from heating of the transmitter coil.

13. The wireless charging system of claim 1, wherein the transmitter pad comprises one or more second thermal imaging cameras or second cameras and second lighting devices that protrude from a surface of a transmitter coil within a predetermined distance outside the transmitter coil, and inspects whether a heating point attributable to a metallic foreign substance or an external creature is present between the transmitter pad and the receiver pad during the charging of the electric vehicle.
